# EUROPÄISCHE PATENTSCHRIFT

(11) **EP 3 245 568 B1**
(45) Veröffentlichungstag und Bekanntmachung des Hinweises auf die Patenterteilung: **07.06.2023**
(21) Anmeldenummer: 16700604.8
(22) Anmeldetag: 14.01.2016
(51) Int. Cl.: G05B 19/409

(54) **VERFAHREN UND SYSTEM ZUM BETRIEB EINER HÜTTENTECHNISCHEN ANLAGE**
METHOD AND SYSTEM FOR OPERATING A METALLURGICAL PLANT
PROCÉDÉ ET SYSTÈME POUR FAIRE FONCTIONNER UNE INSTALLATION SIDÉRURGIQUE

(30) Priorität: 15.01.2015 DE 102015200585
(43) Veröffentlichungstag der Anmeldung: 22.11.2017
(73) Patentinhaber: SMS Group GmbH, 40237 Düsseldorf (DE)
(72) Erfinder: KLEIN, Martin, 45277 Essen (DE); HOFMANN, Oliver, 50739 Köln (DE)
(74) Vertreter: Klüppel, Walter
(86) Internationale Anmeldenummer: PCT/EP2016/050644
(87) Internationale Veröffentlichungsnummer: WO 2016/113343

(56) Entgegenhaltungen:
- EP-A1- 2 306 254
- EP-A1- 2 306 254
- EP-A1- 2 422 900
- EP-A2- 2 515 554
- WO-A2-92/17025
- WO-A2-92/17025
- CN-U- 202 815 877
- DE-A1-102011 090 177
- DE-A1-102011 090 177
- KR-A- 20090 062 974
- KR-A- 20090 066 860
- US-A1- 2009 140 840

## Beschreibung

### Technisches Gebiet

Die vorliegende Erfindung betrifft ein Verfahren zum Betrieb einer hüttentechnischen Anlage mit mindestens einer hüttentechnischen Komponente, bevorzugt mit einer Komponente einer Gießstraße oder einer Komponente einer Walzstraße, sowie ein System zum Betrieb einer solchen hüttentechnischen Anlage.

### Stand der Technik

Zum Betrieb hüttentechnischer Anlagen ist es von Nutzen, wenn auf Informationen über Komponenten oder Anlagenteile leicht zugegriffen werden kann. Hüttentechnische Anlagen weisen eine Vielzahl von Komponenten auf, die Einfluss auf den Produktionsprozess nehmen. Es ist daher notwendig Informationen über die Komponenten, wie beispielsweise Einsatzinformationen, Wartungsdaten und Lokalisierung bereitzustellen, auf die schnell und einfach zugegriffen werden kann.

Die DE 10 2009 053 893 A1 sieht beispielsweise den Einsatz so genannter RFID-Tags vor. RFID-Tags sind Transponder auf denen Informationen beispielsweise über die jeweilige Komponente einer hüttentechnischen Anlage gespeichert sind. Ein in die Nähe eines RFID-Tags gebrachtes Lesegerät erzeugt ein hochfrequentes elektromagnetisches Wechselfeld, welches auf das RFID-Tag wirkt. Über die Hochfrequenzenergie des Wechselfelds wird das RFID-Tag mit Energie versorgt. Von solchen passiven Tags sind aktive Tags zu unterscheiden, deren Energieversorgung durch eine eingebaute Batterie sichergestellt wird.

Im RFID-Tag ist ein Mikrochip vorgesehen, der die durch das elektromagnetische Wechselfeld gesendeten Befehle des Lesegeräts decodiert und in Antwort darauf Modulationen des elektromagnetischen Wechselfelds des Lesegeräts bewirkt und auf diese Weise antwortet. Über die Modulationen überträgt das RFID-Tag seine eigene unveränderliche Seriennummer und weitere, von dem Lesegerät abgefragte, Informationen. Es bleibt dabei festzuhalten, dass der RFID-Tag selbst kein elektromagnetisches Feld erzeugt, sondern für die Informationsübertragung das elektromagnetische Sendefeld des Lesegeräts beeinflusst.

In der WO 2011/120624 A1 ist eine mobile Wartungseinheit beschrieben, bei der eine Verbindung zwischen der Wartungseinheit und der zu wartenden Anlage hergestellt wird. Über die Verbindung werden der Wartungseinheit Informationen über den Wartungs- und Betriebszustand der Maschine und dem Bediener Benutzeranweisungen bereitgestellt. Es kann dabei vorgesehen sein, dass einzelne Bauteile der Maschine mit einem RFID-Chip versehen sind, die der Wartungseinheit Informationen zur Verfügung stellen.

Das Auslesen der Informationen, die auf einem RFID-Tag gespeichert sind, erfordert immer eine Aktivität des Benutzers, nämlich das Aussenden des elektromagnetischen Felds durch das Lesegerät.

Gemäß DE 10 2011 090 177 A1 wird in einer Metallbearbeitungsanlage, insbesondere in einem Walzwerk, eine durch einen Feldbus gebildete Datenübertragungsleitung zwischen dem Automatisierungssystem und den Antrieben, Aktuatoren oder Sensoren der Walzgerüste eingesetzt. Der Feldbus wird durch ein echtzeitfähiges Ethernet gebildet.

Aus EP 2 306 254 A1 ist bereits eine Vorrichtung mit einer Lokalisierungseinheit bekannt, um eine Position der Informationsausgabeeinheit bezüglich der Vorrichtung zu bestimmen. Es lässt sich selbsttätig feststellen, in welchem Bereich der Vorrichtung oder in der Nähe welcher Systeme der Vorrichtung sich die Informationsausgabeeinheit zu einem bestimmten Zeitpunkt befindet.

In ähnlicher Weise wird in EP 2 515 554 A2 ein Verfahren zur Visualisierung von Zustandsdaten einer Maschine in einer zu überwachenden Anlage offenbart, bei dem auf einem Endgerät in Abhängigkeit von der aktuellen Position des Endgeräts die Zustandsdaten einer bestimmten Maschine der überwachten Anlage dargestellt werden, die die geringste Entfernung zu der Position des Endgeräts hat.

Gemäß WO 02/17025 A2 wird ein System zur Prüfung von Produkten mit einem stationären Prüfrechner zur Identifizierung eines Prüflings, einem in dem Prüfling angeordneten mobilen Diagnoseadapter und einem Messadapter zur Erfassung von Messdaten des Prüflings und zur Übermittlung der Messdaten an den stationären Prüfrechner sowie mit einer mobilen Recheneinheit offenbart.

### Darstellung der Erfindung

Daher ist es ausgehend vom Stand der Technik eine Aufgabe der vorliegenden Erfindung, ein einfacheres Verfahren für eine Anzeige von Informationen in einer hüttentechnischen Anlage anzugeben.

Diese Aufgabe wird mittels eines Verfahrens mit den Merkmalen des Anspruchs 1 und mittels eines Systems mit den Merkmalen des Anspruchs 5 gelöst. Vorteilhafte Ausgestaltungen ergeben sich aus den Unteransprüchen. Dementsprechend wird ein Verfahren zum Betrieb einer hüttentechnischen Anlage vorgesehen, mit mindestens einer hüttentechnischen Komponente, bevorzugt eine Komponente einer Gießstraße oder einer Komponente einer Walzstraße. Erfindungsgemäß ist mindestens eine Sendevorrichtung vorgesehen, die ein Identifikationssignal aussendet, welches von einem mobilen Endgerät empfangen wird und in Antwort auf den Empfang des Identifikationssignals auf dem mobilen Endgerät eine Anwendung ausgelöst wird.

Das bedeutet, dass in der hüttentechnischen Anlage eine oder mehrere Sendevorrichtungen angeordnet werden, die ohne irgendeine besondere Aufforderung Identifikationsdaten in Form von Identifikationsnummern in ihre Umgebung senden.

Bevorzugt werden von jeder Sendevorrichtung drei Identifikationsnummern gesendet. Erstens eine so genannte UUID (Universally Unique Identifier), welche der Sendevorrichtung eine allgemeine Zugehörigkeit zuteilt. Die UUID gibt also eine grobe Kennzeichnung der Sendevorrichtung an, die beispielsweise eine Bauart von Stahlwerken oder eine Unternehmenszugehörigkeit oder Ähnliches angibt. Mit der zweiten Identifikationsnummer (Major) wird eine grobe Positionsbestimmung vorgesehen. Darunter fällt beispielsweise ein bestimmtes Stahlwerk oder hüttentechnische Anlage. Die dritte Identifikationsnummer (Minor) gibt eine bestimmte Stelle in der von der zweiten Identifikationsnummer festgelegten Räumlichkeit an. Es bleibt also festzuhalten, dass die drei Identifikationsnummern (UUID, Major und Minor) die Zuordnung und Position der Sendevorrichtung von einer ungefähren Lage zu einer genauen Position hin schrittweise festlegen.

Eine genaue Positionsbestimmung der Sendevorrichtung und seine Zugehörigkeit werden entsprechend beispielsweise durch Senden dieser drei Identifikationsnummern ermöglicht. Die Sendevorrichtung kann eine Funkreichweite von circa 30 Metern aufweisen und die Aussendung der Funksignale kann mit verschiedenen Funktechniken, wie beispielsweise Bluetooth, Bluetooth Low Energy oder Vergleichbares erfolgen.

Das mobile Endgerät ist dazu in der Lage und dazu eingerichtet, die drei Identifikationsnummern zu empfangen und zu erkennen. Das mobile Endgerät kann dabei beispielsweise in der Form eines Mobiltelefons, Smartphones, Tablets oder eines Gerätes mit ähnlichen Eigenschaften vorliegen. Auf dem Endgerät ist in Form von Hardware oder Software eine Anwendung vorgesehen, die ausgelöst wird, wenn die von der Sendevorrichtung gesendeten Identifikationsdaten das Endgerät erreichen. Mit anderen Worten, wird durch den Empfang von durch die Sendevorrichtung gesendeten Identifikationsnummern eine Anwendung beziehungsweise ein Programm auf dem Endgerät gestartet. Eine Bedieneraktion durch einen Bediener ist entsprechend nicht notwendig, da die Anwendung auf dem Endgerät automatisch ausgelöst wird.

Die Anwendung ist dazu in der Lage, Informationen darzustellen und/oder eine Benutzeroberfläche zum Eingeben von Befehlen bereitzustellen. Die angezeigten Informationen können dabei schon auf dem Endgerät gespeichert sein oder in Antwort auf das Auslösen der Anwendung durch das Empfangen des Identifikationssignals über ein Netzwerk, beispielsweise ein Mobilfunknetz oder lokales drahtloses Netzwerk (WLAN) von einem entsprechenden Server abgerufen werden.

Die Sendevorrichtungen sind bevorzugt in einer Verschalung beziehungsweise hinter einem Hitzeschild an der hüttentechnischen Komponente angeordnet, die den zum Teil extremen Umgebungsbedingungen in einer hüttentechnischen Anlage, insbesondere Hitze und Funkenschlag, standhält. Die Sendevorrichtung wird so geschützt. Die Verschalung der Sendevorrichtung sollte dabei allerdings nicht wesentlich die Sendeleistung der Sendevorrichtung vermindern oder die Signale stören.

Die Informationen, welche die Anwendung über eine Komponente der hüttentechnischen Anlage anzeigen kann, umfassen insbesondere aber ohne darauf beschränkt zu sein Informationen über die Bedienung, die Auslastung, mögliche Fehlfunktionen der Komponente oder Informationen für Testläufe und/oder zur Wartung.

Auch ortsbezogene Informationen für Besucher, wie beispielsweise die Funktion der Komponente und deren Anordnung im Produktionsprozess, können angezeigt werden. Zudem ist auch eine Anzeige von aktuellen Informationen in Hinblick auf die Verfolgung von ortsbeweglichen Komponenten der hüttentechnischen Anlage möglich, wenn eine Sendevorrichtung direkt an einer sich bewegenden Komponente angeordnet ist.

Die angezeigten Informationen sind abhängig von der Entfernung, welche zwischen dem Endgerät und der mindestens einen Sendevorrichtung vorliegt. Über die Messung der Signalstärke der Sendevorrichtung kann das Endgerät die Distanz zu der Sendevorrichtung feststellen.

Abhängig von dieser Entfernung zwischen Sendevorrichtung und Endgerät können Informationen auf dem Endgerät über die Anwendung angezeigt werden. Das kann insbesondere dann sinnvoll sein, wenn bestimmte Bereiche, das heißt, bestimmte Entfernungen von der Sendevorrichtung nur für bestimmte Personengruppen zugänglich sind oder sein sollen. So können Informationen für das Bedienpersonal oder für Besucher auch abhängig von der Distanz des Endgeräts zur Sendevorrichtung - also abhängig vom jeweiligen Standort der das mobile Endgerät mitführenden Person - gesteuert werden.

Auch die Anzeige von Warnhinweisen bei einer als risikoreich eingestuften Entfernung zwischen Sendevorrichtung und Endgerät kann über die Distanzmessung auf dem Endgerät angezeigt werden. Ein solcher Gefahrhinweis kann zusätzlich auch von dem jeweiligen Zustand und von der Tätigkeit einer Anlagenkomponente abhängig sein.

Weiterhin wirkt die Anwendung auf die Komponente der hüttentechnischen Anlage operativ ein. Das bedeutet, ausgehend von Informationen, die auf der Anwendung über die Komponente angezeigt werden, kann der Bediener der hüttentechnischen Komponente Steuerungsbefehle zusenden. Dafür muss ein Informationskanal zwischen dem mobilen Endgerät und der hüttentechnischen Komponente oder deren Steuerung bestehen. Eine solche Verbindung kann kabellos beispielsweise über Bluetooth, ein kabelloses Netzwerk oder Ähnliches vorgesehen sein. Alternativ kann auch eine Kabelverbindung zwischen der Komponente und dem Endgerät bestehen, die entweder direkt oder über eine geeignete stationäre Vorrichtung realisiert wird. Die operative Einwirkung auf die Komponente hat den Vorteil, dass auf Informationen, welche die Anwendung anzeigt, sofort reagiert werden kann.

Um es dem Bediener zu ermöglichen, Steuerungsbefehle zu erteilen, kann die Anwendung eine Benutzeroberfläche bereitstellen, die dem Bediener die Eingabe von Steuerungsbefehlen ermöglicht. Das operative Einwirken ist insbesondere zum Testen von Komponenten der hüttentechnischen Anlage vor Ort geeignet (z.B. Bewegen von Ofengefäßen, Segmenten, Kokillen, Walzenständer, Coiler, usw.). Auch bei einer Fehlfunktion einer Komponente kann durch das Eingeben von Steuerungsbefehlen auf eine mögliche oder bestehende Gefährdung reagiert werden.

Besonders bevorzugt veranlasst die Anwendung das Endgerät drahtlos eine Verbindung zu einem internen oder externen Netzwerk herzustellen und der Anwendung über diese Verbindung Informationen zur Verfügung zu stellen. Daraus ergibt sich die Möglichkeit, der Anwendung aktuelle Daten von Komponenten der hüttentechnischen Anlage zur Verfügung zu stellen. Auf Fehlermeldungen kann unmittelbar reagiert werden. Auch der aktuelle Zustand des Gerätes, beispielsweise sein Betriebszustand, kann angezeigt und mit Sollwerten verglichen und somit überprüft werden.

Über ein Netzwerk können auch von dem Endgerät Daten in Form von Bildern oder Bedienereingaben gesendet werden. Solche Daten können für Protokollierungszwecke aber auch bei Reparaturen oder Gefährdungslagen verwendet werden, die zentral gespeichert oder direkt ausgewertet werden.

Weiterhin vorteilhaft sendet die mindestens eine Sendevorrichtung das Identifikationssignal in konstanten zeitlichen Abständen oder durchgehend. Wenn die Sendevorrichtung das Identifikationssignal durchgehend sendet, wird die Anwendung direkt ausgelöst, sobald das Endgerät in den Sendebereich der mindestens einen Sendevorrichtung gelangt. Eine direkte Auslösung der Anwendung und eine Anzeige von Informationen auf dem Endgerät ist die Folge. Dem gegenüber kann die Sendevorrichtung auch dahingehend eingestellt sein, dass sie nur in zeitlichen Abständen, die konstant sein können oder nicht, sendet. Da die Sendevorrichtung eine Energiequelle zur Verfügung haben muss, kann durch das Senden in zeitlichen Abständen die Lebensdauer der Energiequelle der Sendevorrichtung verlängert werden. Alternativ kann die Sendevorrichtung auch direkt an das Stromnetz angeschlossen sein.

Bevorzugt ist es weiterhin, wenn mehrere Sendevorrichtungen vorgesehen sind, durch welche eine exakte Positionsbestimmung des Endgeräts möglich ist. Aufgrund der kugelwelligen Ausbreitung der Identifikationsdaten einer Sendevorrichtung ist eine Positionsbestimmung durch den alleinigen Empfang dieser Daten nur grob möglich.

Für eine eindeutige dreidimensionale Positionsbestimmung des Endgeräts sind mindestens vier Sendevorrichtungen aufgrund der kugelförmigen Ausbreitung ihrer elektromagnetischen Wellen notwendig. Allerdings können auch drei Sendevorrichtungen für eine Positionsbestimmung des Endgeräts ausreichen, da von zwei möglichen Positionen eine üblicherweise aus Plausibilitätsgründen ausgeschlossen werden kann. Durch die genaue Bestimmung des Standortes des Endgeräts kann die Anwendung und/oder ihr Anzeigen von Informationen noch spezifischer und besser abgestimmt werden.

Diese Ausführungen gelten gleichermaßen für ein System nach Anspruch 5.

### Kurze Beschreibung der Figur

Bevorzugte weitere Ausführungsformen und Aspekte der vorliegenden Erfindung werden durch die nachfolgende Beschreibung der Figur näher erläutert. Dabei zeigt:

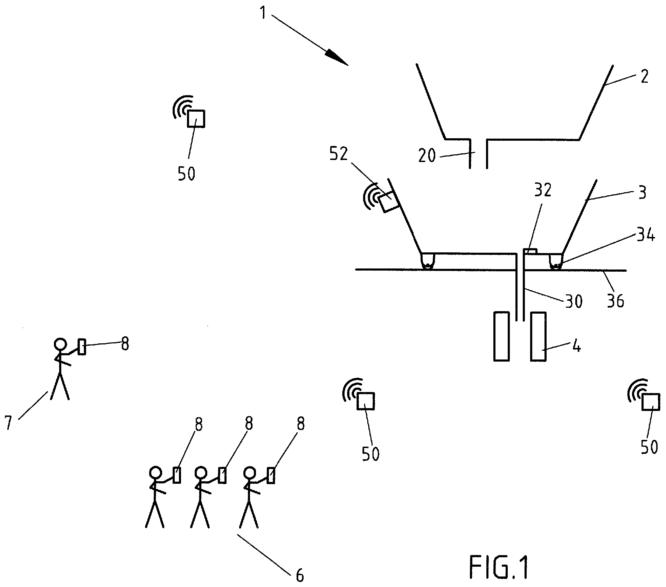

- Figur 1: eine schematische Darstellung eines Ausschnitts einer Stranggießanlage, die mit Sendevorrichtungen ausgestattet ist.

### Detaillierte Beschreibung des bevorzugten Ausführungsbeispiels

Im Folgenden werden bevorzugte Ausführungsbeispiele anhand der Figur beschrieben.

Figur 1 zeigt einen Ausschnitt einer hüttentechnischen Anlage in Form einer Stranggießanlage 1 mit unterschiedlichen hüttentechnischen Komponenten wie beispielsweise einer Pfanne 2 und einem Verteilerwagen 3.

Über den Ausgang 20 der Pfanne 2 gelangt die Schmelze (nicht gezeigt) in den Verteilerwagen 3. Der Verteilerwagen 3 ist beweglich auf Schienen 36 angeordnet. Der Verteilerwagen 3 wird auf Schienen 36 über der Kokille 4 bewegt. Eine Schiebervorrichtung 32 öffnet für die Schmelze den Weg, um über das Ausgangsrohr 30 in die Kokille 4 zu gelangen. An dem Verteilerwagen 3 ist eine Sendevorrichtung 52 angeordnet. Aufgrund der hohen Temperatur der Schmelze in dem Verteilerwagen 3 ist die Sendevorrichtung 52 durch eine Verschalung (nicht gezeigt) vor den hohen Temperaturen geschützt.

Drei weitere stationäre Sendevorrichtungen 50 sind in der Umgebung vorgesehen. Die Sendevorrichtungen 50, 52 senden konstant drei Identifikationsnummern (UUID, Major und Minor) beispielsweise über den Standard Bluetooth Low Energy. Ein Bediener 7 und eine Gruppe von Besuchern 6 befinden sich in der Funkreichweite der Sendevorrichtungen 50, 52. Anwendungen werden auf allen Endgeräten 8 durch das Erkennen der von den Sendevorrichtungen 50, 52 gesendeten Nummern gestartet.

Die Anwendungen sind nämlich dazu eingerichtet, die Position des jeweiligen Endgeräts 8 aufgrund der Signale der vier Sendevorrichtungen 50, 52 zu bestimmen. Die Anwendungen auf den Endgeräten 8 der Besuchergruppe 6 zeigen dann auf dieser Grundlage allgemeine Informationen über den Stahlherstellungsprozess in einer Stranggießanlage und Informationen über die Funktion der von den Besuchern 6 sichtbaren Komponenten, beispielsweise über augmented reality, Zeichnungen oder Bildern.

Die Anwendung für die Besucher 6 kann dabei auch so ausgestaltet sein, dass die Besucher über für sie interessante Bereiche oder Komponenten nähere Informationen über die Anwendung abrufen können.

Die Anwendung 8 des Bedieners 7 zeigt diesem aufgrund der Position des Endgeräts 8 außerhalb der Besucherzone und/oder aufgrund einer anderen Anwendung beziehungsweise anderen Autorisierung der Anwendung auch andere Informationen an. Über eine auf einem Endgerät 8 befindliche Anwendung kann über vorgesehene Sensoren (nicht gezeigt) sowohl in der Pfanne 2 als auch im Verteilerwagen 3 die Temperatur der Schmelze überwacht werden, um Gießabbrüche zu vermeiden und eine homogene Temperaturverteilung für einer zufriedenstellende Stahlqualität sicherzustellen.

Veranlasst durch die gestartete Anwendung kann das Endgerät 8 des Bedieners 7 eine drahtlose Verbindung mit einem internen Netzwerk der Stranggießanlage herstellen und von dort die Daten der Temperartursensoren abrufen. Der Bediener 7 kann somit vor Ort die Temperatur der Schmelze überprüfen. Durch die Anordnung der Sendevorrichtung 52 an dem Verteilerwagen 3 kann zudem die Bewegung des Verteilerwagens 3 überprüft und verfolgt werden. Über eine geeignete elektrische Verbindung mit der Komponente und einer über die Anwendung angebotenen Benutzeroberfläche kann der Bediener weiterhin in die Lage versetzt werden bei von Sollvorgaben abweichenden Informationen auf die Komponenten einzuwirken.

Als Endgerät 8 eignen sich aufgrund ihrer weiten Verbreitung insbesondere Smartphones und Tablets. Das bedeutet, dass insbesondere Besucher auf ihrem Smartphone eine entsprechende Anwendung aus dem Internet oder einem Intranet auf ihr Smartphone vor einer Führung heruntergeladen haben. Die Anwendung auf dem Endgerät 8 des Bedieners 7 kann sich von der öffentlich bereitgestellten Anwendung unterscheiden und beispielsweise nur an Mitarbeiter des Unternehmens herausgegeben werden.

Ein solche Anwendung kann beispielsweise eine Benutzeroberfläche aufweisen, mittels der Befehle an hüttentechnische Komponenten gegeben werden kann. Für den Schutz von beispielsweise über eine Verbindung mit einem firmeneigenen Intranet auf dem Endgerät 8 des Bedieners 7 übertragenen Daten kann eine solche Verbindung auch verschlüsselt werden, um einen unerlaubten Zugriff zu erschweren. Auch das Übermitteln von Befehlen an eine Komponente der hüttentechnischen Anlage über eine von der Anwendung 8 des Bedieners 7 bereitgestellte Benutzeroberoberfläche kann verschlüsselt werden, um Missbrauch zu verhindern.

Anwendungen, die für Besucher vorgesehen sind, können die Besucher vor Gefahren warnen. Das Verlassen der Besucherroute kann durch die Positionsbestimmung des Endgeräts eines Besuchers festgestellt werden und die Anwendung kann den Besucher auf mögliche Gefahren hinweisen. Eine Verbindung des Endgeräts zu einem internen oder externen Netzwerk vorausgesetzt, kann auch das Unternehmen oder Mitarbeiter des Unternehmens über eine solche Gefährdung in Kenntnis gesetzt werden. Warnungen vor gefährlichen Situationen durch die Anwendung sind nicht auf die Besucher beschränkt, sondern sind auch auf Bediener anwendbar.

Wenn sich beispielsweise ein Bediener bei einem geplanten Produktionsschritt, wie dem Eingießen der Schmelze von der Pfanne in den Verteilerwagen, in risikoreicher Nähe befindet kann die Anwendung den Bediener warnen oder vorwarnen. Auch bei außergewöhnlichen Umständen, wie Unfällen oder Fehlfunktionen in der hüttentechnischen Anlage können die Anwendungen Warnungen anzeigen und zudem Informationen über Fluchtwege oder Gegenmaßnahmen bereitstellen. Zudem kann der Bediener über eine auf dem Endgerät vorgesehene Benutzeroberfläche und eine entsprechende elektrische Verbindung bzw. Funkverbindung der gefährdenden Komponente Befehle geben, um eine Gefährdung zu verringern.

Ein Bediener, der für die Wartung der hüttentechnischen Anlage verantwortlich ist, kann über in der hüttentechnischen Anlage verteilte Sendevorrichtungen über ein Intranet den Zustand der Komponenten überprüfen. Die Anwendung kann dafür auch den Weg anzeigen, den der Bediener zurückzulegen hat, um alle Komponenten zu überprüfen. Aufgrund der Positionsbestimmung des Endgeräts des Bedieners kann ein Protokoll seines Wartungsgangs erstellt werden. Mögliche Abweichungen können registriert und dem Bediener mitgeteilt werden.

Bei Wartungsarbeiten können Aus- und Einbauerklärungen durch erweiterte Realität / augmented reality der Anwendung unterstützt und erleichtert werden. Auch Wartungshandbücher, Zeichnungen, Instandhaltungsinformationen können positionsbezogen über die Anwendung auf dem Endgerät bereitgestellt werden. Aufgrund der Positionsbestimmung des Endgeräts können Wartungs- oder Reparaturarbeiten auch ortsbezogen koordiniert werden. Wenn beispielsweise bei einer Komponente der hüttentechnischen Anlage Arbeiten an verschiedenen Positionen notwendig sind, kann die Anwendung abhängig von der Position des Endgeräts dem Bediener Anweisungen geben. Wartungs- und Reparaturarbeiten können über die Positionsbestimmung des Endgeräts angeleitet und auch überprüft werden.

Weiterhin können mit dem Endgerät gemachte Bilder einer funktionsuntüchtigen Komponente an einen zentralen Speicher gesendet und eine Analyse der Komponente durchgeführt werden. Dabei kann es von Vorteil sein, wenn die Information des genauen Standorts bekannt ist, von dem das Bild gemacht wurde. Diese Information ist durch die Positionsbestimmung des Endgeräts gegeben. Basierend auf einer Analyse des positionsbestimmten Bildes können dann Reparaturanweisungen an den Bediener gesendet werden.

Soweit anwendbar können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Ausschnitt einer Stranggießanlage
- 2: Pfanne
- 20: Ausgang der Pfanne
- 3: Verteilerwagen
- 30: Ausgangsrohr des Verteilerwagens
- 32: Verschiebevorrichtung
- 34: Räder des Verteilerwagens
- 36: Schienen
- 4: Kokille
- 50: stationäre Sendevorrichtung
- 52: Sendevorrichtung an beweglicher Komponente
- 6: Besucher
- 7: Bediener
- 8: mobiles Endgerät

## Patentansprüche

1. Verfahren zum Betrieb einer hüttentechnischen Anlage (1) mit mindestens einer hüttentechnischen Komponente (2, 3), bevorzugt einer Komponente einer Gießstraße oder einer Komponente einer Walzstraße,
**dadurch gekennzeichnet,**
**dass** mindestens
eine Sendevorrichtung (50, 52) vorgesehen ist, die ein Identifikationssignal aussendet, welches von einem mobilen Endgerät (8) empfangen wird,
**dass** in Antwort auf den Empfang des Identifikationssignals auf dem mobilen Endgerät (8) automatisch eine Anwendung ausgelöst wird, die Informationen über die hüttentechnische Komponente (2, 3) der hüttentechnischen Anlage (1) anzeigt,
**dass** die angezeigten Informationen abhängig von der Entfernung sind, die zwischen dem mobilen Endgerät (8) und der mindestens einen Sendevorrichtung (50, 52) vorliegt,
und **dass** die Anwendung operativ auf die hüttentechnische Komponente (2, 3) einwirkt.

2. Verfahren nach Anspruch 1, **dadurch gekennzeichnet, dass** die Anwendung das mobile Endgerät (8) dazu veranlasst, eine Verbindung zu einem internen oder externen Netzwerk herzustellen und der Anwendung darüber Informationen zur Verfügung zu stellen.

3. Verfahren nach Anspruch 1 oder 2, **dadurch gekennzeichnet, dass** die mindestens eine Sendevorrichtung (50, 52) an einer der hüttentechnischen Komponenten (2, 3) angeordnet ist.

4. Verfahren nach einem der vorstehenden Ansprüche, **dadurch gekennzeichnet, dass** mehrere Sendevorrichtungen (50, 52) vorgesehen sind, die unterschiedliche Identifikationssignale aussenden und in Antwort auf den Empfang mindestens zweier unterschiedlicher Identifikationssignale eine Positionsbestimmung des mobilen Endgeräts (8) durchgeführt wird.

5. System zum Betrieb einer hüttentechnischen Anlage (1) mit mindestens einer hüttentechnischen Komponente (2, 3), bevorzugt einer Komponente einer Gießstraße oder einer Komponente einer Walzstraße, **dadurch gekennzeichnet, dass** das System mindestens ein mobiles Endgerät (8) und mindestens eine Sendevorrichtung (50, 52) umfasst, wobei die mindestens eine Sendevorrichtung (50, 52) dazu eingerichtet ist, ein Identifikationssignal auszusenden, welches auf dem mobilen Endgerät (8) empfangbar ist, und dass das mobile Endgerät (8) dazu eingerichtet ist, beim Empfang des Identifikationssignals automatisch eine Anwendung auszulösen, die dazu eingerichtet ist, Informationen über die hüttentechnische Komponente (2, 3) auf dem mobilen Endgerät (8) anzuzeigen, dass die angezeigten Informationen abhängig von der Entfernung sind, die zwischen dem mobilen Endgerät (8) und der mindestens einen Sendevorrichtung (50, 52) vorliegt, und dass die Anwendung dazu eingerichtet ist, operativ auf die hüttentechnische Komponente (2, 3) einzuwirken.

6. System nach Anspruch 5, **dadurch gekennzeichnet, dass** die Anwendung dazu eingerichtet ist, das mobile Empfangsgerät (8) dazu zu veranlassen, eine Verbindung zu einem internen oder externen Netzwerk herzustellen und der Anwendung darüber Informationen zur Verfügung zu stellen.

7. System nach Anspruch 5 oder 6, **dadurch gekennzeichnet, dass** die mindestens eine Sendevorrichtung (50, 52) an der hüttentechnischen Komponente (2, 3) angeordnet ist.

8. System nach einem der Ansprüche 5 bis 7, **dadurch gekennzeichnet, dass** mehrere Sendevorrichtungen (50, 52) vorgesehen sind, durch die eine Positionsbestimmung des mobilen Endgeräts (8) möglich ist.

## Claims

1. Method of operating a metallurgical plant (1) with at least one metallurgical component (2, 3), preferably a component of a casting line or a component of a rolling train,
**characterised in that**
at least one transmitting device (50, 52), which transmits an identification signal which is received by a mobile terminal (8), is provided,
an application which displays data about the metallurgical component (2, 3) of the metallurgical plant (1) is automatically triggered at the mobile terminal (8) in response to receipt of the identification signal,
the displayed data are dependent on the distance between the mobile terminal (8) and the at least one transmitting device (50, 52) and
the application operatively acts on the metallurgical component (2, 3).

2. Method according to claim 1, **characterised in that** the application causes the mobile terminal (8) to produce a connection with an internal or external network and the application makes data available about that.

3. Method according to claim 1 or 2, **characterised in that** the at least one transmitting device (50, 52) is arranged at one of the metallurgical components (2, 3).

4. Method according to any one of the preceding claims, **characterised in that** a plurality of transmitting devices (50, 52), which transmit different identification signals, is provided and a positional determination of the mobile terminal (8) is performed in response to receipt of at least two different identification signals.

5. System for operating a metallurgical plant (1) with at least one metallurgical component (2, 3), preferably a component of a casting line or a component of a rolling train, **characterised in that** the system comprises at least one mobile terminal (8) and at least one transmitting device (50, 52), wherein the at least one transmitting device (50, 52) is arranged to transmit an identification signal receivable at the mobile terminal (8) and the mobile terminal (8) is arranged to automatically trigger, on receipt of the identification signal, an application which is arranged to display data about the metallurgical component (2, 3) on the mobile terminal (8), the displayed data are dependent on the distance present between the mobile terminal (8) and the at least one transmitting device (50, 52) and the application is arranged to operatively act on the metallurgical component (2, 3).

6. System according to claim 5, **characterised in that** the device is arranged to cause the mobile terminal (8) to produce a connection with an internal or external network and to make data available about that to the application.

7. System according to claim 5 or 6, **characterised in that** the at least one transmitting device (50, 52) is arranged at the metallurgical component (2, 3).

8. System according to any one of claims 5 to 7, **characterised in that** a plurality of transmitting devices (50, 52), by which a positional determination of the mobile terminal (8) is possible, is provided.

## Revendications

1. Procédé destiné à l'exploitation d'une installation sidérurgique (1) qui comprend au moins un composant sidérurgique (2, 3), de préférence un composant d'une ligne de coulée ou un composant d'un train de laminoir, **caractérisé**
**en ce que** l'on prévoit au moins un dispositif d'émission (50, 52) qui émet un signal d'identification qui est reçu par un équipement terminal mobile (8) ;
**en ce que**, en réponse à la réception du signal d'identification sur l'équipement terminal mobile (8), une application est déclenchée de manière automatique, qui affiche des informations qui concernent le composant sidérurgique (2, 3) de l'installation sidérurgique (1) ;
**en ce que** les informations affichées dépendent de la distance qui sépare l'équipement terminal mobile (8) et ledit au moins un dispositif d'émission (50, 52) ;
et **en ce que** l'application a un impact opérationnel sur le composant sidérurgique (2, 3).

2. Procédé selon la revendication 1, **caractérisé en ce que** l'application de l'appareil de l'équipement terminal mobile (8) permet d'établir une liaison avec un réseau interne ou externe et, par cet intermédiaire, de mettre des informations à la disposition de l'application.

3. Procédé selon la revendication 1 ou 2, **caractérisé en ce que** ledit au moins un dispositif d'émission (50, 52) est disposé sur un des composants sidérurgiques (2, 3).

4. Procédé selon l'une quelconque des revendications précédentes, **caractérisé en ce que** l'on prévoit plusieurs dispositifs d'émission (50, 52) qui émettent des signaux d'identification différents et, en réponse à la réception d'au moins deux signaux d'identification différents, on met en oeuvre une estimation de la position de l'équipement terminal mobile (8).

5. Système destiné à l'exploitation d'une installation sidérurgique (1) qui comprend au moins un composant sidérurgique (2, 3), de préférence un composant d'une ligne de coulée ou un composant d'un train de laminoir, **caractérisé en ce que** le système comprend au moins un équipement terminal mobile (8) et au moins un dispositif d'émission (50, 52), dans lequel ledit au moins un dispositif d'émission (50, 52) est conçu pour émettre un signal d'identification qui peut être reçu sur l'équipement terminal mobile (8) ; et **en ce que** l'équipement terminal mobile est conçu, lors de la réception du signal d'identification, pour déclencher de manière automatique une application qui est conçue pour afficher des informations qui concernent le composant sidérurgique (2, 3) sur l'équipement terminal mobile (8) ; **en ce que** les informations affichées dépendent de la distance qui sépare l'équipement terminal mobile (8) et ledit au moins un dispositif d'émission (50, 52) ; et **en ce que** l'application est conçue pour avoir un effet opérationnel sur le composant sidérurgique (2, 3).

6. Système selon la revendication 5, **caractérisé en ce que** l'application est conçue d'une manière telle que l'équipement de réception mobile (8) permet d'établir une liaison avec un réseau interne ou externe et de mettre des informations à la disposition de l'application par cet intermédiaire.

7. Système selon la revendication 5 ou 6, **caractérisé en ce que** ledit au moins un dispositif d'émission (50, 52) est disposé sur le composant sidérurgique (2, 3).

8. Système selon l'une quelconque des revendications 5 à 7, **caractérisé en ce que** l'on prévoit plusieurs dispositifs d'émission (50, 52) par l'intermédiaire desquels une détermination de la position de l'équipement terminal mobile (8) est possible.
